# EUROPÄISCHE PATENTSCHRIFT

(11) **EP 2 013 047 B1**
(45) Veröffentlichungstag und Bekanntmachung des Hinweises auf die Patenterteilung: **21.07.2010**
(21) Anmeldenummer: 07722328.7
(22) Anmeldetag: 30.04.2007
(51) Int. Cl.: B60J 7/185

(54) **KRAFTFAHRZEUGVERDECK**
SOFT TOP FOR A MOTOR VEHICLE
CAPOTE POUR VÉHICULE AUTOMOBILE

(30) Priorität: 04.05.2006 DE 102006020873
(43) Veröffentlichungstag der Anmeldung: 14.01.2009
(73) Patentinhaber: Webasto AG, 82131 Stockdorf (DE)
(72) Erfinder: DIETL, Rudolf, 81247 München (DE)
(74) Vertreter: Roos, Peter
(86) Internationale Anmeldenummer: PCT/DE2007/000771
(87) Internationale Veröffentlichungsnummer: WO 2007/128269

(56) Entgegenhaltungen:
- EP-A- 1 295 746
- EP-B1- 0 763 439
- DE-A1-102004 052 236
- DE-B3- 10 241 799
- US-B1- 6 361 086

## Beschreibung

Die vorliegende Erfindung betrifft ein Verdeck eines Kraftfahrzeugs, insbesondere Cabriolets, nach dem Oberbegriff des Anspruchs 1.

Ein derartiges Kraftfahrzeugverdeck ist beispielsweise aus der EP 0 763 439 B1 bekannt und umfasst eine an einem vorderen Verdeckabschnitt angeordnete Verriegelungseinrichtung, die beidseits jeweils einen motorisch angetriebenen Verschlusshaken zum Verriegeln des Verdecks an einem Windlauf oberhalb der Windschutzscheibe aufweist. Das Verdeck ist in eine heckseitige Ablagestellung zurückklappbar, in welcher es mittels einer Arretiereinrichtung gehalten werden kann. Die Arretiereinrichtung umfasst verdeckseitig den Verschlusshaken und karosserieseitig einen schwenkbaren Sperrriegel, der im arretierten Zustand des Verdecks mit einer Verschlusshakennase in Riegeleingriff steht. Das Verdeck weist einen mit dem Verschlusshaken in Antriebsverbindung stehenden Verriegelungsantrieb zum Verschwenken des Verschlusshakens zwischen seiner Verriegelungsstellung und seiner Entriegelungsstellung auf, wobei die damit bewirkbare Verschwenkung des Verschlusshakens sowohl bei der Verriegelung des Verdecks am Windlauf als auch bei der Arretierung des Verdecks in der heckseitigen Ablagestellung angesteuert wird.

Das bekannte Verdeck besitzt eine Reihe von Nachteilen. Beispielsweise erfordert die Arretierung des Verdecks eine präzise mit der Verdeckbewegung koordinierte und somit relativ aufwändige Ansteuerung des Verriegelungsantriebs. Ein weiterer Nachteil besteht darin, dass ein geringes Spiel bzw. eine Spielfreiheit des Verdecks im arretierten Zustand nur mit geringen Fertigungstoleranzen und einer präzisen Betätigung des Verschlusshakens möglich ist. Des weiteren erfordert die Freigabe der Arretierung einen vergleichsweise großen Kraftaufwand, mittels welchem der im Arretierkraftfluss stehende Verschlusshaken zu verschwenken ist. Durch die Konstruktion bedingt ist eine "Notfreigabe" der Arretierung (bei Ausfall des Verriegelungsantriebs) nicht möglich.

Es ist eine Aufgabe der vorliegenden Erfindung, die Arretierung sowie die Freigabe der Arretierung bei einem Kraftfahrzeugverdeck der eingangs genannten Art zu vereinfachen.

Diese Aufgabe wird bei einem gattungsgemäßen Verdeck dadurch gelöst, dass die Arretiereinrichtung eine Federeinrichtung aufweist, gegen deren Federkraft das Verdeck in die Ablagestellung läuft, und dass die Verschwenkung des Fanghakens in seine Freigabestellung zum Freigeben der Arretierung mittels des Verriegelungsantriebs bewirkbar ist. Die abhängigen Ansprüche betreffen vorteilhafte Weiterbildungen der Erfindung.

Das erfindungsgemäße Verdeck läuft gegen die Federkraft einer Federeinrichtung in die heckseitige Ablagestellung, so dass ein Teil der im arretierten Zustand auf das Verdeck einwirkenden Kräfte bereits durch die Federeinrichtung aufgenommen werden kann. Ein anderer Teil der Kräfte wird durch den Eingriff des Fanghakens mit dem Fanghakeneingriffsteil aufgenommen. Zum Freigeben der Arretierung wird vorteilhaft der ohnehin zum frontseitigen Verriegeln und Entriegeln des Verdecks vorhandene Verriegelungsantrieb genutzt, um den Fanghaken in seine Freigabestellung zu verschwenken. Vorteilhaft kann die Gestaltung des Fanghakens samt zugehörigem Fanghakeneingriffsteil unabhängig von der Konstruktion und dem Bewegungsablauf des Verschlusshakens vorgenommen werden, so dass die zur frontseitigen Verriegelung vorgesehenen Komponenten, insbesondere der Verschlusshaken, unabhängig von den zur heckseitigen Arretierung vorgesehenen Komponenten, insbesondere dem Fanghaken, für ihre jeweilige Aufgabe optimiert gestaltet werden können. Insbesondere sind Ausgestaltungen möglich, bei denen eine vollkommen passive Arretierung durch Einfahren des Verdecks in seine Ablagestellung erfolgt und/oder das arretierte Verdeck in einfacher Weise spielfrei gehalten wird und/oder ein relativ geringer Kraftaufwand zum Freigeben der Arretierung erforderlich ist, was insbesondere zum Vorsehen einer Notfreigabe bei Ausfall des Verriegelungsantriebs interessant ist.

Insbesondere im Hinblick auf eine Bauraum- und Gewichtsersparnis im Verdeckbereich ist eine karosserieseitige Anordnung der Federeinrichtung bevorzugt. In diesem Fall kann die Federeinrichtung beispielsweise eine entgegen der Einlaufrichtung des Verdecks in die Ablagestellung federvorbelastete Zentrieraufnahme zur Zentrierung eines verdeckseitigen Zentrierstifts aufweisen. Alternativ kann karosserieseitig auch ein federvorbelasteter Zentrierstift vorgesehen sein, der beim Einlaufen des Verdecks in die Ablagestellung in eine verdeckseitige Zentrieraufnahme einläuft.

Ganz allgemein ist es von Vorteil, wenn die Federeinrichtung baulich mit einer Zentriereinrichtung zusammengefasst ist, welche bei arretiertem Verdeck quer zur Einlaufrichtung des Verdecks in die Ablagestellung wirkende Kräfte aufnimmt, beispielsweise Kräfte in Längsrichtung und/oder Querrichtung.

In einer bevorzugten Ausführungsform ist vorgesehen, dass die Verschwenkung des Fanghakens in seine Freigabestellung zum Freigeben der Arretierung dadurch bewirkt wird, dass ein Abschnitt des Verschlusshakens gegen einen mittleren Abschnitt des Fanghakens anläuft. Dies ist insbesondere deshalb von Vorteil, weil hierbei die Antriebsverbindung bzw. Getriebeverbindung zwischen dem Verriegelungsantrieb und dem Verschlusshaken auch bei der Freigabe der Arretierung genutzt werden kann und keine eigens hierfür vorgesehene Antriebsverbindung zwischen dem Verriegelungsantrieb und dem Fanghaken benötigt wird. In einer konstruktiv besonders einfachen Ausführungsform ist vorgesehen, dass die Freigabe der Arretierung durch Anlaufen eines freien Endes des Verschlusshakens gegen den mittleren Abschnitt des Fanghakens bewirkt wird.

In einer bevorzugten Ausführungsform ist vorgesehen, dass die Federkraft der Federeinrichtung zumindest so groß bemessen ist, dass der Eingriff des Fanghakens mit dem Fanghakenteil im unbelasteten Zustand des Verdecks spielfrei gehalten wird. Im Hinblick auf etwaig in der Praxis auftretende größere Belastungen des arretierten Verdecks, beispielsweise wenn das Fahrzeug bei geöffnetem Verdeck über eine holprige Fahrbahn fährt, ist die Federkraft bevorzugt sogar noch größer bemessen (z. B. wenigstens doppelt so groß). Dies besitzt dann noch die zusätzliche Wirkung, dass allein durch die Freigabe der Arretierung das Verdeck federkraftgetrieben ein Stück weit aus seiner Ablagestellung heraus bewegt wird. Die damit in der Praxis erzielbaren Vorteile werden aus dem unten noch beschriebenen Ausführungsbeispiel deutlich.

Die Erfindung eignet sich für praktisch jede Art von Verdeck wie z. B. ein Faltverdeck mit einem flexiblen Verdeckstoff, der auf einem Verdeckgestänge aufgespannt ist, oder z. B. ein aus mehreren gegeneinander bewegbaren Dachpaneelen gebildetes öffnungsfähiges Fahrzeugdach.

In einer bevorzugten Ausführungsform umfasst die Verriegelungseinrichtung in an sich bekannter Weise beidseits der Fahrzeugmitte jeweils den Verschlusshaken, der dann mit beidseits der Fahrzeugmitte angeordneten Verschlusshakeneingriffsteilen des Windschutzscheibenrahmens zusammenwirkt. Ebenfalls in an sich bekannter Weise kann die Verriegelungseinrichtung ferner verdeckseitig und karosserieseitig angeordnete Zentrierkomponenten wie z. B. einen Zentrierstift an der Verdeckspitze und eine korrespondierende Zentrieraufnahme am Windschutzscheibenrahmen (oder umgekehrt) aufweisen. Diese Zentrierkomponenten sind bevorzugt ebenfalls beidseits der Fahrzeugmitte vorgesehen.

Auch die gemäß der Erfindung vorgesehene Arretiereinrichtung kann vorteilhaft beidseits der Fahrzeugmitte jeweils den Fanghaken mit zugehörigem Fanghakeneingriffsteil sowie die Federeinrichtung umfassen.

Bei beidseitiger Anordnung der Komponenten der Verriegelungseinrichtung und/oder der Arretiereinrichtung kann ein gemeinsamer Verriegelungsantrieb vorgesehen sein. Alternativ kann für jede Fahrzeugseite ein eigener Verriegelungsantrieb vorgesehen sein.

Der Verriegelungsantrieb kann z. B. ein elektromotorischer Antrieb sein. Alternativ kommt z. B. auch ein hydraulischer oder pneumatischer Antrieb in Betracht.

Der Verschlusshaken ist bevorzugt um eine Querachse verschwenkbar.

Falls der Fanghaken am Verdeck angeordnet ist, so ist es im Hinblick auf eine vereinfachte Konstruktion bevorzugt, wenn eine Verschwenkachse des Verschlusshakens gleichzeitig eine Verschwenkachse des Fanghakens bildet. Hierzu kann beispielsweise ein in Querrichtung sich erstreckender, am vorderen Verdeckabschnitt gelagerter Lagerstift vorgesehen sein, der sowohl den Verschlusshaken als auch den Fanghaken durchsetzt und für diese beiden Haken eine gemeinsame Schwenklagerung bildet.

Falls jedoch der Fanghaken an der Karosserie angeordnet ist und dementsprechend das Fanghakeneingriffsteil am Verdeck angeordnet ist, so kann für eine vereinfachte Konstruktion das Fanghakeneingriffsteil im Bereich der Verschwenkungsachse des Verschlusshakens vorgesehen sein. Beispielsweise kann ein in Querrichtung sich erstreckender Lagerbolzen des Verschlusshakens an einem seiner Enden das Fanghakeneingriffsteil tragen oder ausbilden.

In einer bevorzugten Ausführungsform ist der Fanghaken um eine Querachse verschwenkbar. In diesem Fall kann das Fanghakeneingriffsteil z. B. von einem seitlich abstehenden Stift oder Stiftabschnitt gebildet sein. Ein solcher Stift bzw. Stiftabschnitt kann in seinem zum Eingriff mit dem Fanghaken vorgesehenen Bereich wenigstens eine Schrägfläche (z. B. konusartige Fläche) aufweisen, um bei der Herstellung der Eingriffsverbindung eine seitliche Führung des betreffenden Fanghakenabschnitts zu gewährleisten

In einer bevorzugten Ausführungsform ist der Fanghaken in Richtung der Arretierstellung federvorbelastet. Damit ist eine Arretierung des Verdecks in passiver Weise und ein passives Aufrechterhalten der Arretierung in besonders einfacher Weise möglich. Hierbei ist bevorzugt, dass zur Arretierung der Fanghaken zunächst in Richtung seiner Freigabestellung geschwenkt wird und beim Erreichen der Ablagestellung in den Eingriff mit dem Fanghakeneingriffsteil federgetrieben zurückverschwenkt wird.

Bevorzugt ist der Fanghaken karosserieseitig und das Fanghakeneingriffsteil verdeckseitig angeordnet. Prinzipiell kommt jedoch auch die umgekehrte Anordnung dieser beiden Komponenten in Betracht.

Die Erfindung wird nachfolgend anhand eines Ausführungsbeispiels mit Bezug auf die beigefügten Zeichnungen näher erläutert. Es stellen dar:
- Fig. 1: ist eine perspektivische Ansicht eines Cabriolet-Verdecks,
- Fig. 2: ist eine schematische Seitenansicht einer Arretiereinrichtung, mittels welcher das Verdeck von Fig. 1 nach dem Zurückklappen desselben in einer heckseitigen Ablagestellung arretiert ist,
- Fig. 3: eine der Fig. 2 entsprechende Ansicht unmittelbar nach Freigabe der in Fig. 2 ersichtlichen Arretierung des Verdecks,
- Fig. 4: eine der Fig. 2 entsprechende Ansicht der Arretiereinrichtung in einem Zustand nach der Freigabe der Arretierung, in welchem das Verdeck federgetrieben ein Stück weit aus seiner Ablagestellung heraus- bewegt wurde,
- Fig. 5: eine der Fig. 2 entsprechende Ansicht der Arretiereinrichtung in einem Zustand unmittelbar vor Beginn eines Verdeckschließvorganges, und
- Fig. 6: eine schematische perspektivische Ansicht der Arretiereinrichtung.

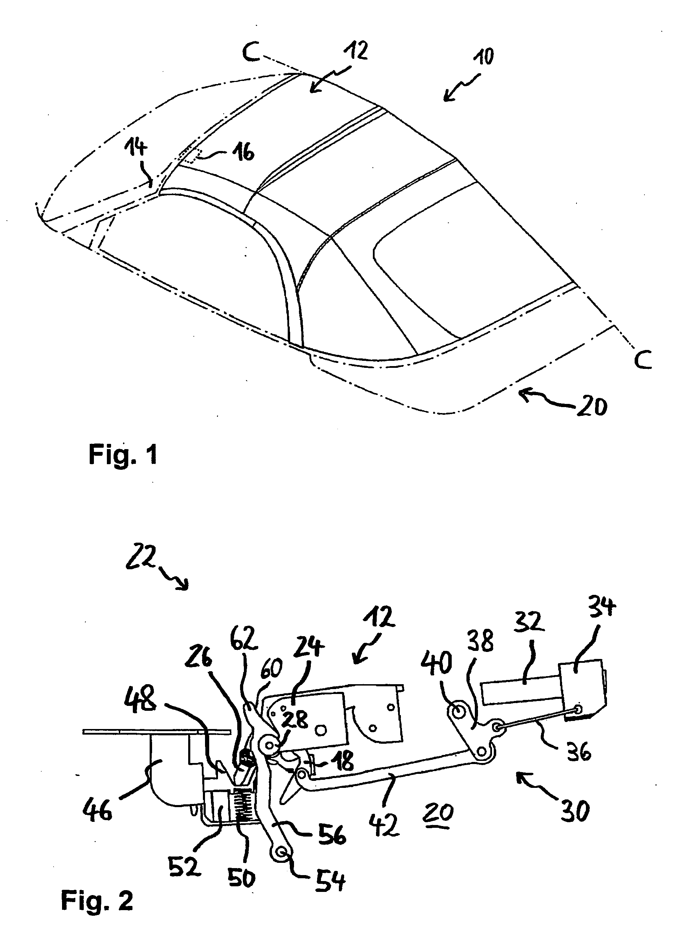

Fig. 1 zeigt ein Verdeck 10 eines Cabriolets in seiner Schließstellung, in welcher ein vorderer Verdeckabschnitt 12 an einem Windschutzscheibenrahmen 14 anliegt und mit diesem verriegelbar ist.

Der Einfachheit der Darstellung halber ist in Fig. 1 lediglich der links von einer Fahrzeuglängsmittellinie C-C liegende Teil des Verdecks bzw. der angrenzenden Fahrzeugkomponenten gezeichnet.

Beiderseits der Fahrzeugmitte sind jeweils Komponenten einer Verriegelungseinrichtung angeordnet, mittels welcher das Verdeck 10 mit seinem vorderen Verdeckabschnitt 12 am Windschutzscheibenrahmen 14 verriegelbar ist. Der Ort der links von der Fahrzeugmitte befindlichen Verriegelungskomponenten ist in Fig. 1 gestrichelt bei 16 eingezeichnet. Die (nicht dargestellten) rechten Verriegelungskomponenten sind symmetrisch zur Fahrzeuglängsmittellinie C-C angeordnet. Von den beiderseits der Fahrzeugmitte angeordneten Komponente der Verriegelungseinrichtung sowie einer nachfolgend noch beschriebenen Arretiereinrichtung werden aufgrund der symmetrischen Gestaltung lediglich die auf einer Fahrzeugseite befindlichen Komponenten detailliert beschrieben.

Die Verriegelungseinrichtung umfasst im Bereich 16 verdeckseitig einen in eine Verriegelungsstellung verschwenkbaren Verschlusshaken 18 (vgl. Fig. 2), der im verriegelten Verdeckzustand ein korrespondierendes Verschlusshakeneingriffsteil am Windschutzscheibenrahmen 14 untergreift. Nach einem Verschwenken des Verschlusshakens 18 in eine Entriegelungsstellung kann das Verdeck geöffnet werden. Im dargestellten Ausführungsbeispiel erfolgt die Verdecköffnung durch ein hydraulisch getriebenes Zurückklappen des Verdecks 10 in eine heckseitige Ablagestellung, in welcher das Verdeck 10 zusammengefaltet in einem Verdeckkasten 20 im Heckbereich des Fahrzeugs untergebracht wird und dort mittels einer Arretiereinrichtung 22 arretiert werden kann, die nachfolgend mit Bezug auf die Fig. 2 bis 6 beschrieben wird.

Fig. 2 zeigt den auf einer Fahrzeugseite angeordneten Teil der Komponenten der Arretiereinrichtung 22, die zum Verständnis der vorliegenden Erfindung besonders wesentlich sind. Diese Komponenten sind tatsächlich doppelt, symmetrisch zur Fahrzeugmitte, vorgesehen.

Fig. 2 veranschaulicht das in seiner heckseitigen Ablagestellung arretierte Verdeck 10, von welchem in Fig. 2 ein seitliches Verdeckgestänge-Vorderteil 24 mit dem verschwenkbar daran gelagerten Verschlusshaken 18, ein am Vorderteil 24 fest angeordneter Zentrierstift 26, ein Fanghakeneingriffsteil 28 sowie eine Betätigungsmechanik 30 zum Verschwenken des Verschlusshakens 18 ersichtlich sind.

Das Verdeckgestänge-Vorderteil 24 bildet zusammen mit dem dieses Teil überspannenden, in Fig. 2 nicht dargestellten Verdeckstoffes die Verdeckspitze (quer verlaufende Vorderkante) des Verdecks 10. Das Fanghakeneingriffsteil 28 ist ein von dem Vorderteil 24 seitwärts nach außen abstehender und an seinem freien Ende pilzartig verbreiterter Stiftabschnitt. Im Bereich dieses Fanghakeneingriffsteils 28 befindet sich die quer verlaufende Verschwenkachse des Verschlusshakens 18, der in Fig. 2 in seiner Entriegelungsstellung gezeigt ist. Wenn das Verdeck geschlossen wird und das Vorderteil 24 samt Verschlusshaken 18 an den Windschutzscheibenrahmen 14 geführt ist, so kann durch eine Verschwenkung des Verschlusshakens 18 im Uhrzeigersinn die frontseitige Verriegelung des Verdecks 10 am Windschutzscheibenrahmen 14 erfolgen.

Die Verschwenkung des Verschlusshakens 18 erfolgt durch einen elektromotorischen Antrieb, von welchem in Fig. 2 lediglich eine verdeckfeste Linearführung 32 mit einem in Längsrichtung verfahrbaren Reiter 34 ersichtlich ist (z. B. Spindeltrieb). Die Bewegung des Reiters 34 entlang der Linearführung 32 wird über einen ersten Lenker 36, eine Schwenkplatte 38, die bei 40 um eine verdeckfeste Querachse verschwenkbar ist, und einen zweiten Lenker 42 in eine entsprechende Schwenkbewegung des Verschlusshakens 18 gewandelt. Die Komponenten 36, 38 und 42 bilden zusammen die Betätigungsmechanik 30 zum Verschwenken des Verschlusshakens 18 zwischen der dargestellten Entriegelungsstellung und einer im Uhrzeigersinn um etwa 90 Grad verschwenkten Verriegelungsstellung. Bei dem dargestellten Zentrierstift 26, der zur Zentrierung des Verdecks in der heckseitigen Ablagestellung dient, kann es sich um einen Zentrierstift handeln, der gleichzeitig auch für die frontseitige Zentrierung des Verdecks 10 verwendet wird. Im dargestellten Ausführungsbeispiel handelt es sich bei dem Zentrierstift 26 jedoch um ein eigens zur Zentrierung in der heckseitigen Ablagestellung vorgesehenes Teil.

In Fig. 2 erkennt man ferner als karosserieseitige Komponente ein Trägerteil 46, an welchem schwenkbeweglich eine trichterartige Zentrieraufnahme 48 nach hinten absteht, in welcher der Zentrierstift 26 im heckseitig abgelegten Zustand des Verdecks 10 aufgenommen und sowohl in Fahrzeuglängsrichtung als auch in Fahrzeugquerrichtung zentriert wird. Die Schwenkbeweglichkeit der Zentrieraufnahme 28 ist um eine Querachse herum vorgesehen, die sich im Bereich des Trägerteils 46 befindet. Die Zentrieraufnahme 48 ist im dargestellten Zustand durch den Zentrierstift 26 nach unten bzw. im Uhrzeigersinn belastet und entgegen der Kraft einer Druckfeder 50 nach unten gedrückt bzw. verschwenkt. Im dargestellten Ausführungsbeispiel ist der Feder 50 funktional parallel ein elastisches Dämpferglied 52 angeordnet, mittels welchem gewissermaßen ein "nachgiebiger Anschlag" für die Verschwenkung der Zentrieraufnahme 48 gebildet wird, der einer Bewegung des Verdecks 10 nach unten entgegenwirkt.

Eine Bewegung des arretierten Verdecks 10 nach oben wird durch den Eingriff eines karosserieseitig um eine Querachse 54 schwenkbar gelagerten Fanghakens 56 mit dem verdeckseitigen Fanghakeneingriffsteil 28 verhindert.

Im arretierten Zustand des Verdecks 10 gemäß Fig. 2 ist somit das Verdeck 10 sicher am bzw. im Verdeckkasten 20 gehalten. Durch die Federeinrichtungen 50, 52 wird hierbei unabhängig von etwaigen Fertigungstoleranzen ein spielfreier Eingriff zwischen einem oberen Hakenabschnitt des Fanghakens 56 und dem Eingriffsteil 28 sichergestellt.

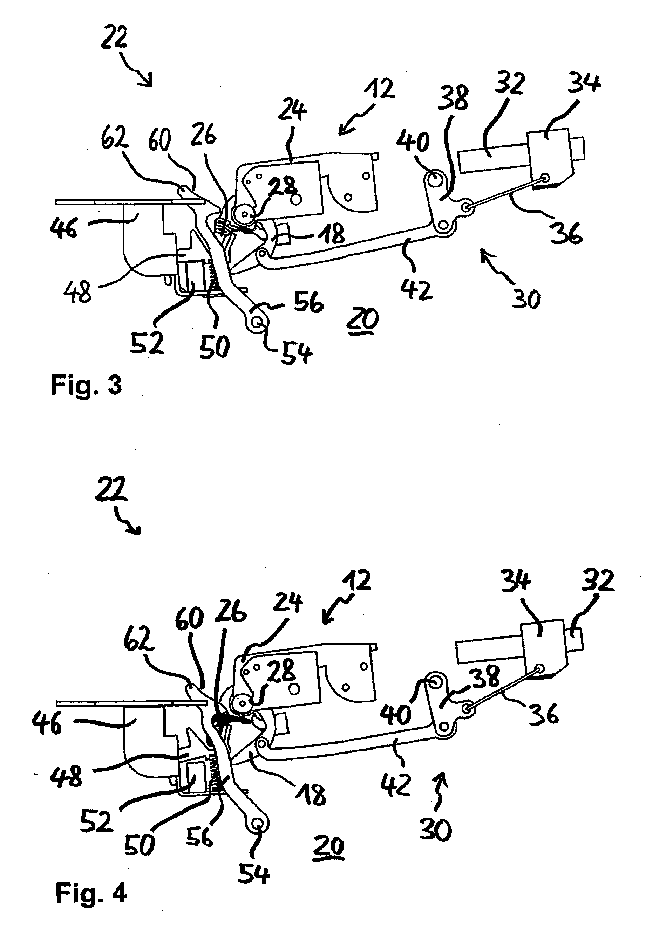

Eine Freigabe der Arretierung des Verdecks 10 kann in einfacher Weise durch eine Ansteuerung des zum Verschwenken des Verschlusshakens 18 vorgesehenen Verriegelungsantriebs initiiert werden. Bei dem dargestellten Ausführungsbeispiel ist vorgesehen, dass zum Freigeben der Verdeckarretierung 22 der Verriegelungsantrieb kurzzeitig für eine Verschwenkung des Verschlusshakens 18 in Richtung seiner Verriegelungsstellung (Verschwenkung im Uhrzeigersinn) angesteuert wird und der Verschlusshaken 18 dann wieder in seine Entriegelungsstellung zurückverschwenkt wird. Hierdurch ergeben sich die in den Fig. 3 bis 5 dargestellten Situationen bzw. Stadien.

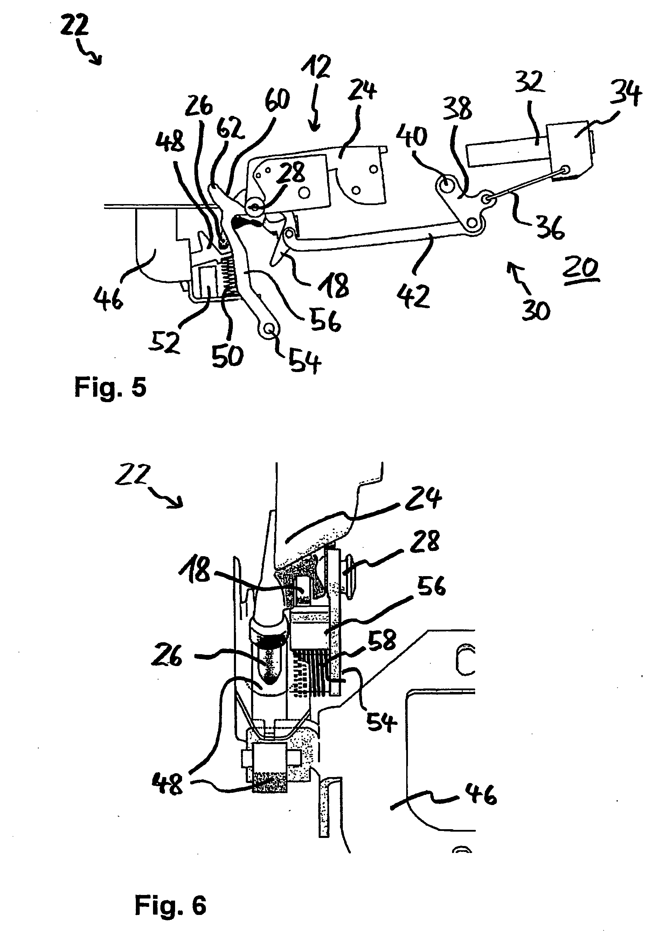

Fig. 3 zeigt die Situation, in welcher der Verschlusshaken 18 ein Stück weit im Uhrzeigersinn verschwenkt ist und mit seinem freien Ende einen mittleren Abschnitt des Fanghakens 56 entgegen der Kraft einer in den Fig. 2 bis 5 nicht ersichtlichen Feder 58 (vgl. Fig. 6) nach vorne drückt bzw. entgegen dem Uhrzeigersinn verschwenkt, so dass der obere Hakenabschnitt des Fanghakens 56 aus dem Eingriff mit dem Fanghakeneingriffsteil 28 kommt.

Sodann kann sich die Druckfeder 50 unter Anhebung der Zentrieraufnahme 48 und somit des Verdecks 10 entspannen. Diese Situation ist in Fig. 4 dargestellt.

Wenn nun wie in Fig. 5 dargestellt, der Verschlusshaken 18 wieder in seine Ausgangsstellung (Entriegelungsstellung) zurückgeschwenkt wird, so schwenkt auch der Fanghaken 56 federgetrieben wieder in Richtung seiner Arretierstellung (im Uhrzeigersinn). Aufgrund der geringfügig angehobenen Lage des Verdecks 10 und somit des Fanghakeneingriffsteils 28 kann der Hakenabschnitt des Fanghakens 56 hierbei jedoch nicht mehr in Eingriff mit dem Eingriffsteil 28 gelangen.

Das Verdeck 10 wird dann mittels eines hierfür vorgesehenen hydraulischen Antriebs in Schließrichtung weiterbewegt, etwa um wieder die in Fig. 1 dargestellte Schließstellung zu erreichen.

Wenn das Verdeck 10 ausgehend von der in Fig. 1 dargestellten Schließstellung zurückgeklappt und in die heckseitige Ablagestellung verbracht wird, so realisiert die beschriebene Ausführungsform vorteilhaft eine passive Arretierung des Verdecks in dem Sinne, dass hierfür, abgesehen von der motorisch bzw. hydraulisch angetriebenen Verdeckbewegung, kein aktiver Antrieb irgendeiner Komponente der Arretiereinrichtung erforderlich ist. Wenn nämlich während des Verdecköffnungsvorganges das verdeckseitige Fanghakeneingriffsteil 28 auf den federbelastet in seiner Arretierstellung gehaltenen Fanghaken 56 trifft, so wirkt das Eingriffsteil 28 derart auf eine überhalb des Hakenbereichs befindliche Schrägfläche bzw. Steuerfläche 60 des Fanghakens 56 ein, dass damit der Fanghaken 56 zunächst unter Überwindung seiner Federvorbelastung in Richtung seiner Freigabestellung verschwenkt wird und dann das Eingriffsteil 28 in dem Hakenabschnitt einrastet. Unmittelbar vor diesem Einrasten er gibt sich die in Fig. 5 dargestellte Situation, die bei der weiteren Verdeckbewegung in Ablagerichtung unmittelbar in die Situation gemäß Fig. 2 mündet, in welcher das Verdeck 10 an der Arretiereinrichtung 22 verrastet in seiner Lage gehalten wird.

Fig. 6 zeigt in einer schrägen Draufsicht nochmals einige der oben bereits beschriebenen Komponenten der Arretiereinrichtung 22.

Bei dem dargestellten Ausführungsbeispiel ist das freie Ende des Fanghakens 56 von einer von oben gut zugänglichen Griffnase 62 gebildet, an welcher der Fanghaken 56 zum Zwecke einer Notfreigabe (bei Ausfall des Verriegelungsantriebs) zum Verschwenken angegriffen werden kann. Ein ebenfalls in Längsrichtung betrachtet hinterer Rand dieser Griffnase 62 bildet die erwähnte Steuerfläche 60.

Zusammenfassend wird bei dem oben beschriebenen Fahrzeugverdeck eine im Bereich des Verdeck-Hauptlagers befindliche Arretiereinrichtung verwendet, die in einen arretierenden Eingriff geht, sobald das Verdeck 10 die Ablageposition erreicht. Ähnlich wie bei einer Skibindung wird unmittelbar vor dem Erreichen der Ablagestellung die Kraft einer Federvorbelastung überwunden, wofür eine Verdeckhydraulik bzw. ein elektrischer Hauptantrieb den nötigen Druck liefert. Die zu überwindende Vorspannung kommt aus einer mit Federdruck beaufschlagten Ablagezentrierung und ist auch für den arretierten abgelegten Zustand des Verdecks von Nutzen, etwa um das Verdeck auch gegen dynamische Belastungen während der Fahrt zu sichern.

Das Verriegelungselement der Arretiereinrichtung ist ein karosserieseitig angelenkter Fanghaken, der an einem Gegenstück (Fanghakeneingriffsteil) am vorderen Dachrahmen des Verdecks eingreift. Auch die umgekehrte Anordnung dieser beiden Arretierungskomponenten ist möglich.

Es genügt eine kurze Betätigung des zur Verriegelung des Verdecks ohnehin vorhandenen Verschlusshakens, um die heckseitige Arretierung zu lösen. Diese schnappt dann auf und das Verdeck wird ein Stück weit angehoben. Der Verschlusshaken kann sofort wieder zurück in seine Ausgangsstellung gefahren werden, was eine elektronische Verdecksteuereinheit ohne Berücksichtigung von irgendwelchen Sensorsignalen ansteuert. Das Verdeck kann dann sogleich von dem entsprechenden Hauptantrieb in Schließrichtung angetrieben werden. Ein weiterer Vorteil der beschriebenen Ausführungsform besteht darin, dass eine einfache Notentriegelung der Arretiereinrichtung 22 durch manuelles Verschwenken des federbelasteten Fanghakens ermöglicht ist. Das Verdeck 10 federt dann von selbst (durch die Kraft der Druckfeder 50 getrieben) etwas nach oben. Ein motorischer Antrieb ist für diese Freigabe der Arretierung nicht erforderlich. In dieser Hinsicht ist es von Vorteil, wenn im arretierten Zustand des Verdecks das freie Ende des Fanghakens für eine solche manuelle Verschwenkung für einen Benutzer von außen zugänglich ist. Bei dem beschriebenen Ausführungsbeispiel ist aufgrund der karosserieseitigen Anlenkung des Fanghakens 56 dessen freies Ende von oben gut zugänglich. Aufgrund der insgesamt einfachen Konstruktion ist ein spezieller Sensor zum Erfassen der Arretierung entbehrlich.

### Bezugszeichenliste

- 10: Verdeck
- 12: vorderer Verdeckabschnitt
- 14: Windschutzscheibenrahmen
- 16: Verriegelungskomponenten
- 18: Verschlusshaken
- 20: Verdeckkasten
- 22: Arretiereinrichtung
- 24: seitliches Verdeckgestänge-Vorderteil
- 26: Zentrierstift
- 28: Fanghakeneingriffsteil
- 30: Betätigungsmechanik
- 32: Linearführung
- 34: Reiter
- 36: erster Lenker
- 38: Schwenkplatte
- 40: Querachse
- 42: zweiter Lenker
- 46: Trägerteil
- 48: Zentrieraufnahme
- 50: Druckfeder
- 52: Dämpfer
- 54: Querachse
- 56: Fanghaken
- 58: Feder
- 60: Steuerfläche
- 62: Griffnase

## Patentansprüche

1. Verdeck eines Kraftfahrzeugs, welches in seiner Schließstellung mittels eines an einem vorderen Verdeckabschnitt (12) angeordneten, in eine Verriegelungsstellung verschwenkbaren Verschlusshakens (18) an einem Windschutzscheibenrahmen (14) verriegelbar und nach Verschwenken des Verschlusshakens (18) in eine Entriegelungsstellung in eine heckseitige Ablagestellung verlagerbar ist, in welcher das Verdeck mittels einer Arretiereinrichtung (22) arretierbar ist, wobei das Verdeck einen mit dem Verschlusshaken (18) in Antriebsverbindung stehenden Verriegelungsantrieb (32, 34) zum Verschwenken des Verschlusshakens (18) zwischen der Verriegelungsstellung und der Entriegelungsstellung aufweist, wobei die Arretiereinrichtung (22) karosserieseitig oder verdeckseitig einen Fanghaken (56) aufweist, der zwischen einer Arretierstellung und einer Freigabestellung verschwenkbar ist und in Arretierstellung im arretierten Zustand des Verdecks mit einem verdeckseitigen bzw. karosserieseitigen Fanghakeneingriffsteil (28) in Eingriff steht,
**dadurch gekennzeichnet, dass** die Arretiereinrichtung (22) eine Federeinrichtung (50, 52, 48) aufweist, gegen deren Federkraft das Verdeck in die Ablagestellung läuft, und dass die Verschwenkung des Fanghakens (56) in seine Freigabestellung zum Freigeben der Arretierung mittels des Verriegelungsantriebs (32, 34) bewirkbar ist.

2. Verdeck nach Anspruch 1, wobei die Federeinrichtung (50, 52) karosserieseitig angeordnet ist.

3. Verdeck nach Anspruch 2, wobei die Federeinrichtung (50, 52, 48) eine entgegen der Einlaufrichtung des Verdecks in die Ablagestellung federvorbelastete Zentrieraufnahme (48) zur Zentrierung eines verdeckseitigen Zentrierstifts (26) aufweist.

4. Verdeck nach einem der vorangehenden Ansprüche, wobei die Verschwenkung des Fanghakens (56) in seine Freigabestellung zum Freigeben der Arretierung **dadurch** bewirkt wird, dass ein Abschnitt des Verschlusshakens (18) gegen einen mittleren Abschnitt des Fanghakens (56) anläuft.

5. Verdeck nach einem der vorangehenden Ansprüche, wobei der Fanghaken (56) um eine Querachse (54) verschwenkbar ist.

6. Verdeck nach einem der vorangehenden Ansprüche, wobei der Fanghaken (56) in Richtung der Arretierstellung federvorbelastet ist.

7. Verdeck nach Anspruch 6, wobei der Fanghaken (56) und das Fanghakeneingriffsteil (28) beim Einlaufen des Verdecks in die Ablagestellung derart zusammenwirken, dass der Fanghaken (56) zunächst unter Überwindung seiner Federvorbelastung in Richtung seiner Freigabestellung verschwenkt wird und beim Erreichen der Ablagestellung in den Eingriff mit dem Fanghakeneingriffsteil (28) federgetrieben zurückverschwenkt wird.

8. Verdeck nach Anspruch 6, wobei der Fanghaken (56) karosserieseitig und das Fanghakeneingriffsteil (28) verdeckseitig angeordnet ist.

## Claims

1. Top for a motor vehicle, which can be locked in its closed position on a windscreen frame (14) by means of a closure hook (18), which is arranged on a front top section (12) and can be pivoted into a locking position, and displaced into a rear storage position, in which the top can be fixed by means of a fixing device (22), after the closure hook (18) is pivoted into an unlocking position, wherein the top has a locking drive (32, 34) which is drive-connected to the closure hook (18) for pivoting the closure hook (18) between the locking position and the unlocking position, wherein the fixing device (22) has a catch hook (56) on the body or top side, which can be pivoted between a fixing position and a releasing position and, when in the fixing position when the top is in the fixed state, engages with a catch hook engagement part (28) on the top or body side,
**characterised in that** the fixing device (22) has a spring device (50, 52, 48), against the spring force of which the top moves into the storage position and that the pivoting of the catch hook (56) into its releasing position for releasing the fixing can be effected by means of the locking drive (32, 34).

2. Top according to Claim 1, wherein the spring device (50, 52) is arranged on the body side.

3. Top according to Claim 2, wherein the spring device (50, 52, 48) has a centring socket (48), which is spring-loaded counter to the insertion direction of the top into the storage position, for centring a topside centring pin (26).

4. Top according to one of the preceding claims, wherein the pivoting of the catch hook (56) into its releasing position for releasing the fixing is effected in that a section of the closure hook (18) moves against a central section of the catch hook (56).

5. Top according to one of the preceding claims, wherein the catch hook (56) can be pivoted about a transverse axis (54).

6. Top according to one of the preceding claims, wherein the catch hook (56) is spring-loaded in the direction of the fixing position.

7. Top according to Claim 6, wherein the catch hook (56) and the catch hook engagement part (28) interact during insertion of the top into the storage position in such a manner that the catch hook (56) is initially pivoted in the direction of its releasing position while overcoming its spring-loading and is pivoted back in a spring-driven manner into engagement with the catch hook engagement part (28) when the storage position is reached.

8. Top according to Claim 6, wherein the catch hook (56) is arranged on the body side and the catch hook engagement part (28) is arranged on the top side.

## Revendications

1. Capote d'un véhicule automobile, qui dans sa position de fermeture peut être verrouillée au moyen d'un crochet de fermeture (18) disposé sur une portion de capote avant (12), basculable dans une position de verrouillage sur une armature de vitre brise-vent (14) et peut être déplacée après le basculement du crochet de fermeture (18) dans une position de déverrouillage dans une position repliée vers l'arrière, dans laquelle la capote peut être bloquée au moyen d'un dispositif de blocage (22), moyennant quoi la capote présente un entraînement de verrouillage (32, 34) en liaison d'entraînement avec le crochet de fermeture (18) afin de basculer le crochet de fermeture (18) entre la position de verrouillage et la position de déverrouillage, moyennant quoi le dispositif de blocage (22) présente du côté de la carrosserie ou du côté de la capote un crochet d'arrêt (56), qui est basculable entre une position de blocage et une position de déblocage et dans la position de blocage en l'état bloqué de la capote vient en prise avec une pièce de mise en prise avec le crochet d'arrêt (28) du côté de la capote, resp. du côté de la carrosserie,
**caractérisée en ce que** le dispositif de blocage (22) présente un dispositif de ressort (50, 52, 48), contre la force de ressort duquel la capote se roule en position repliée, et **en ce que** le basculement du crochet d'arrêt (56) dans sa position de déblocage peut être provoqué afin de débloquer le blocage au moyen de l'entraînement de verrouillage (32, 34).

2. Capote selon la revendication 1, dans laquelle le dispositif de ressort (50, 52) est disposé du côté de la carrosserie.

3. Capote selon la revendication 2, dans laquelle le dispositif de ressort (50, 52, 48) présente un réceptacle de centrage (48) précontraint par ressort dans la position repliée en sens contraire à la direction de déploiement de la capote afin de centrer une goupille de centrage (26) du côté de la capote.

4. Capote selon une des revendications précédentes, dans laquelle le basculement du crochet d'arrêt (56) dans sa position de déblocage afin de débloquer le blocage est provoqué du fait qu'une portion du crochet de fermeture (18) vient buter contre une portion centrale du crochet d'arrêt (56).

5. Capote selon un des revendications précédentes, dans laquelle le crochet d'arrêt (56) est basculable autour d'un axe transversal (54).

6. Capote selon une des revendications précédentes, dans laquelle le crochet d'arrêt (56) est précontraint par ressort dans la direction de la position de blocage.

7. Capote selon la revendication 6, dans laquelle le crochet d'arrêt (56) et la pièce de mise en prise avec le crochet d'arrêt (28) coopèrent lors du roulement de la capote en la position repliée de telle sorte que le crochet d'arrêt (56) soit d'abord basculé en surmontant sa précontrainte par ressort dans la direction de sa position de déblocage et est basculé en sens inverse par entraînement de ressort quand la position repliée est atteinte lors de la mise en prise avec la pièce de mise en prise avec le crochet d'arrêt (28).

8. Capote selon la revendication 6, dans laquelle le crochet d'arrêt (56) est disposé du côté de la carrosserie et la pièce de mise en prise avec le crochet d'arrêt (28) est disposée du côté de la capote.
